# EUROPEAN PATENT SPECIFICATION

(11) **EP 1 848 606 B1**
(45) Date of publication and mention of the grant of the patent: **08.04.2009**
(21) Application number: 06727247.6
(22) Date of filing: 10.02.2006
(51) Int. Cl.: B60J 7/10, B60P 7/04

(54) **SIDE CURTAIN TENSIONING HOOK DEVICE FOR SEMI TRAILERS AND TRAILERS**
HAKENVORRICHTUNG ZUM SPANNEN DER SEITENPLANE VON AUFLIEGERN UND ANHÄNGERN
DISPOSITIF DE TYPE CROCHET-TENDEUR POUR BACHES LATERALES DESTINE A DES SEMI-REMORQUES ET DES REMORQUES

(30) Priority: 11.02.2005 IT GE20050012
(43) Date of publication of application: 31.10.2007
(73) Proprietor: Giacobini, Marina, 16165 Genova (IT)
(72) Inventor: Giacobini, Marina, 16165 Genova (IT)
(74) Representative: Herberg, Carsten
(86) International application number: PCT/IB2006/000254
(87) International publication number: WO 2006/085198

(56) References cited:
- EP-A- 1 588 883
- WO-A-00/64703
- WO-A-98/24679
- DE-A1- 19 915 927

## Description

### TECHNICAL FIELD

The present invention relates to tensioning hook devices for attaching curtains to the sideboards of semi trailers and trailers.

### BACKGROUND ART

The Italian patent application No. GE2004A000031 filed on the 21st of April 2004 in the name of the same Applicant, describes a tensioning hook for side curtains of semi-trailers and trailers. The hook comprises a base plate; a lever attached by means of an articulated connection to the base plate; a hook portion carried by an end of the lever; and a plaque adapted to be guided in a slidable manner along the base plate. One end of the plaque is provided with means for fixation to the vehicle curtain, while blocking means are foreseen to regulate the plaque position on the base plate.

A similar tensioning hook is disclosed in WO 98/24679.

In order to fix the hook to the sideboard of the semi trailer, the lever is pivoted downwards around short lever arms in order to move the hook portion as far downwards as possible with respect to the sideboard; afterwards the hook portion is pushed with an upwards thrust so that the lever will pivot upwards around said lever arms.

### DISCLOSURE OF INVENTION

The aim of the present invention is to provide a side curtain tensioning hook device for semi trailers and trailers, which will improve the hooking action to the sideboard, and preferably, and the retention of the hook device in position.

According to the present invention, a side curtain tensioning hook device for semi trailers and trailers is made, as defined in claim 1.

### BRIEF DESCRIPTION OF THE DRAWINGS

For easier understanding of the present invention, a preferred embodiment is described herein as an example, but by no means limiting, with reference to the attached drawings wherein:
- figure 1 is a schematic side elevation view of a truck covered with a curtain which is stretched on the vehicle by means of a set of tensioning hook devices according to the invention;
- figure 2 is a longitudinal cross section view, with certain parts visible, of a tensioning hook device during the stage that precedes the hook-up action to the sideboard of the truck;
- figure 3 is a view similar to that in figure 2, during the stage following the hook-up to the sideboard of the truck;
- figure 4 is an elevation view of the tensioning hook device shown in figure 2;
- figure 5 is similar to the view shown in figure 3 and shows, in a partial cross section, a second embodiment of the tensioning hook device according to the present invention;
- figure 6 is an elevation view of the tensioning hook device shown in figure 5;
- figures 7 and 8 show respective variants of the tensioning hook device shown in figure 2, enlarged in scale and with certain parts removed for clarity; and
- figure 9 is similar to figure 2 and shows a third embodiment of the tensioning hook device according to the present invention.

### BEST MODE FOR CARRYING OUT THE INVENTION

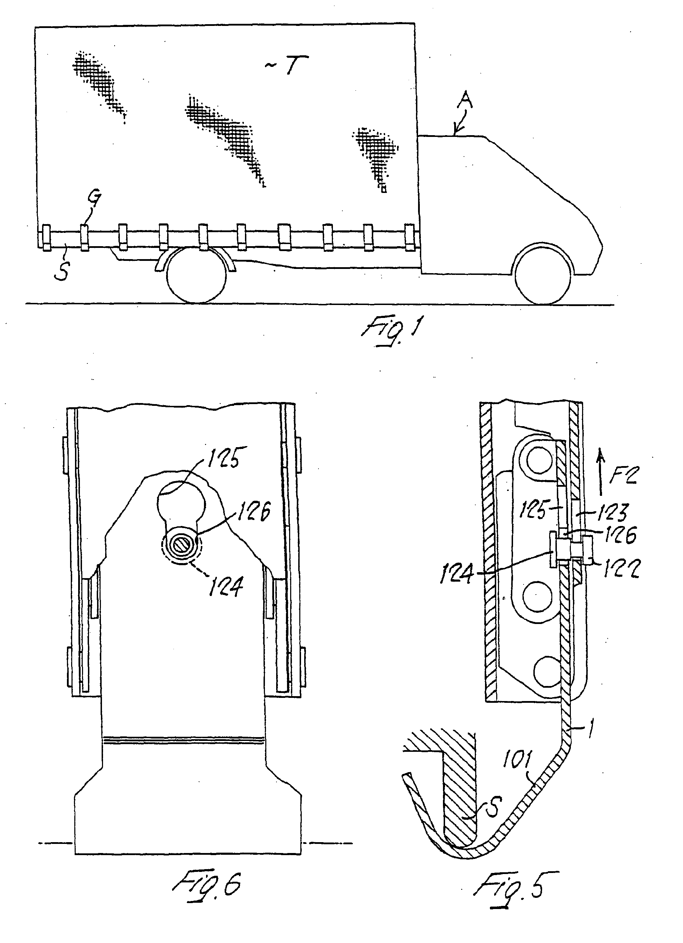

In reference to the drawings and in particular reference to figure 1, the letter A identifies a truck provided with a curtain T. The edges of curtain T are attached by means of a set of devices G that are hooked up to the sideboard S of truck A.

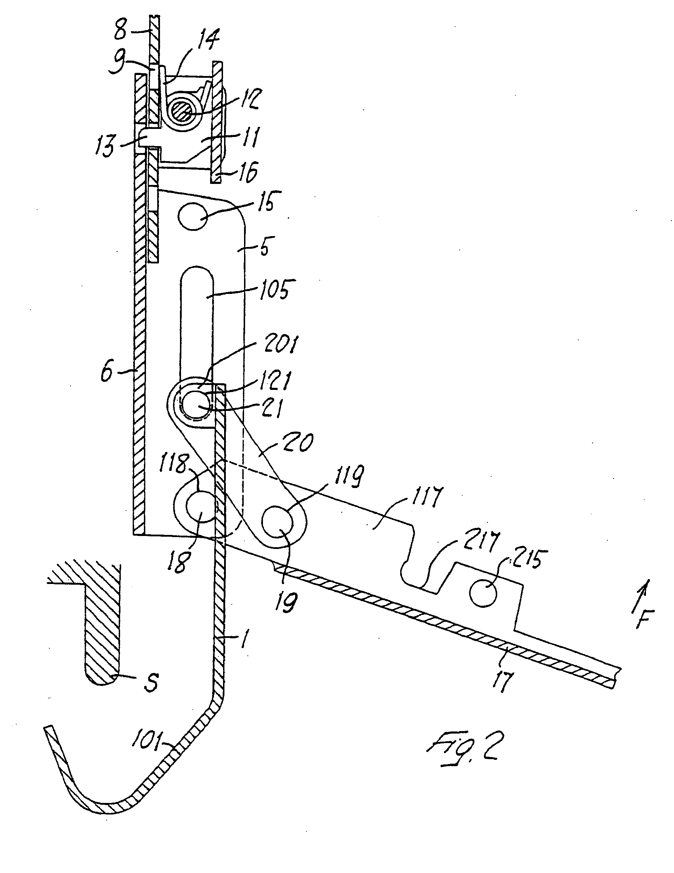

Figures 2, 3 and 4, refer to the description of the first embodiment of the device G according to the invention.

The device G comprises a base plate 6 having a substantially U-shaped cross section, the arms of said U element being defined by two side walls 5. In an intermediate portion of each of the said side walls 5 is an associated slot 105, elongated in the longitudinal direction.

The numeral 17 refers to a lever having a U-shaped cross section, comprising a pair of wings 117, parallel and facing each other, the ends of said wings being drilled with respective coaxial through holes 118 engaged by a pin 18 disposed at right angles to a vertical or longitudinal direction of coupling action.

The ends of pin 18 engage the respective coaxial through holes 18 drilled in the lower ends of the side walls 5 of the base plate 6. A second pair of coaxial holes 119 are drilled on the wings 117 of lever 17 at a relatively short distance from the holes 118.

The numeral 20 refers to two short arms or links, the ends of each being drilled with through holes 119 and 121 respectively. Holes 119 are reciprocally coaxial and are engaged by respective pins 19, which are parallel with pin 18 and provide articulated connection between the links 20 and the wings 117 of lever 17; while a single through pin 21 engages holes 121, pin 21 being also parallel with pin 18.

The ends of pin 21 protrude from the holes 121 and engage the slots 105 of side walls 5 in a sliding manner.

The wings 117 of lever 17 have a specifically shaped notch 217 at a certain height, that substantially corresponds with the position the pin 21 will reach at the end of its upward travel along the slots 105. The notch 217 is designed to perform a snap-lock action with pin 21 during the closure stage of lever 17 in a manner so that lever 17 is maintained in a closed position. Moreover, the wings 117 of lever 17 are provided with respective through holes 215 which, in the closed position, are aligned with a through hole 15 in the side walls 5. Once the holes 15 and 215 are aligned, they are used for the insertion of the so-called Customs inspection seal.

A hook 101 is suspended from pin 21 in an articulated manner by means of a pair of drilled lugs 201 supported by a portion of shank 1 of hook 101. In other words, the hook 101 is able to rotate freely around the axis of pin 21, which is substantially at right angles to the longitudinal sliding direction of said pin 21.

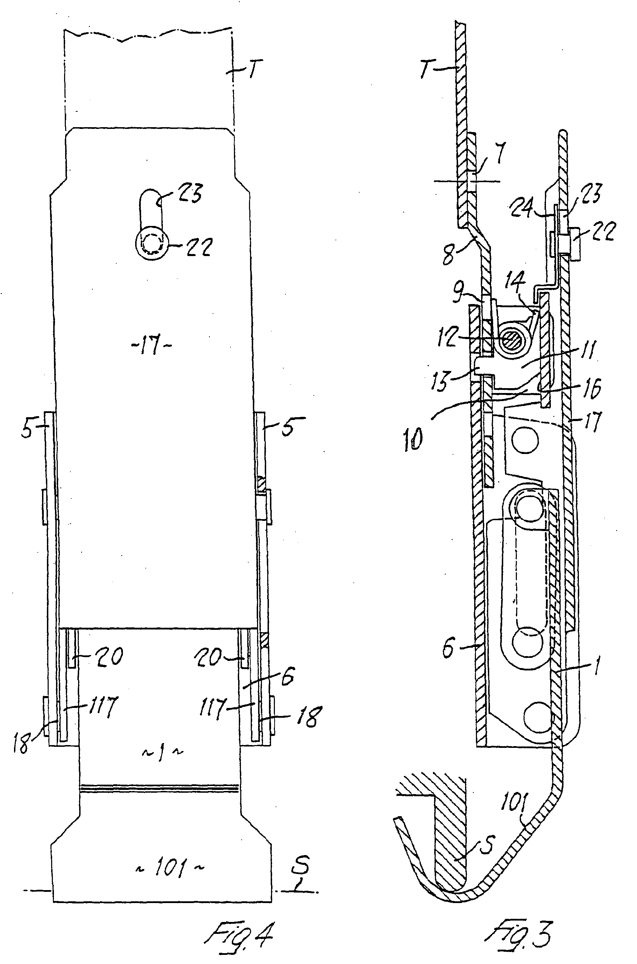

Lastly, in turn, the base plate 6 carries a sliding plaque 8, the other end of said plate being intended to be attached to the edge of curtain T, for example by means of rivets (not shown) that pass through holes 7 drilled in a head portion of plaque 8. Plaque 8 has two rows of holes 9 positioned along two longitudinal directrix in plaque 8 at regular intervals, and is guided to slide between two guide walls or side uprights 10 of the base plate 6 (figure 3). A pawl 11 is hinged to the guide walls 10 by means of a pin 12 parallel with pin 21. The pawl 11 has two teeth 13 adapted to engage with the holes 9 in the plaque 8, said teeth having a sloping and/or rounded side so that the plaque 8 is able to slide in step mode, in relation to the base plate 6, in a single direction only, preventing any slide travel in the opposite direction. A spring 14 wound around the pin 12 constantly moves the pawl 11 back to a position where it is engaged in the holes 9. The numeral 16 refers to an appendix associated with the pawl 11; the rising action of said appendix causes the release of the pawl 11 from plaque 8.

In reference to figures 3 and 4, a safety blocking device is provided. The safety blocking device comprises a pin 22, which in turn comprises a manoeuvring knob, is mounted so that it slides in a slot 23 on the back of the lever 17, and carries a bolt 24. In a final sliding position of pin 22 (position shown in figure 3) said bolt 24 is adapted to engage with an edge of appendix 16 to block lever 17 in a closed position.

The hook-up method of device G is described as follows.

In reference to the position shown in figure 2, lever 17 has been rotated in a downward direction, and therefore hook 101 has been moved to a released or unhooked position, lower than the position of the sideboard S, and ready to be hooked up to the said sideboard S. By moving the lever 17 in the direction of the arrow F in figure 2, rotating the lever 17 upwards around its pin 18, the pin 21 is pushed by the rod 20 and is moved upwards, thus making the hook 101 rise to the hook-up position of sideboard S, shown in figure 3.

In the situation shown in figure 3, the pins 19 have exceeded the dead centre defined by the alignment between pins 21 and 18, and therefore maintain the lever 17 closed through the tensioning of curtain T in a longitudinal direction.

As a safety precaution against accidental opening of lever 17, in the situation shown in figure 3, the pin 21 is automatically engaged in the specifically shaped notch 217 of lever 17. Furthermore, by sliding the pin 22 along the slot 23, the bolt 24 can be hooked up to the edge of appendix 16, providing further protection to prevent the opening of lever 17 and the accidental release of hook 101.

Sideboard S can be unhooked only after pin 22 has been disengaged from appendix 16, by rotating lever 17 manually in a downward direction, first to disengage the pin 21 from the specifically shaped notch 217, and then to pull pin 21 downwards, thus pulling down hook 101.

Figures 5 and 6 show a second embodiment of device G, whose component parts are identified, where possible, by the same reference numerals used in figures 3 and 4.

According to this embodiment, the safety block device comprises a button slider 122, an end of which is designed to slide in a guide 123 made in the back of the lever 17, the other end carrying a circular head 124 engaged in a slot made in the shank 1 of hook 101. Said slot, better shown in figure 6, comprises, at one end, a circular portion 125, which has a diameter large enough to permit the passage of head 124 and is connected with a portion 126 having a narrower width, with a diameter smaller than head 124; therefore when the.slider 122 is in the hook-up position shown in figure 5, hook 101 is blocked, whereas by moving the slider 122 in the direction of the arrow F2 along the guide 123, the lever 17 is unblocked.

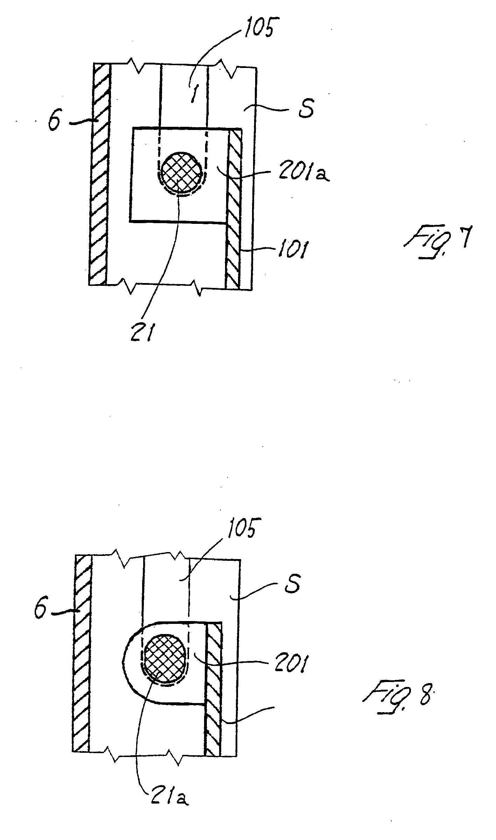

Figures 7 and 8 show respective variants of device G according to the invention, whose component parts are identified where possible, by the same reference numerals as those shown in figure 2. In these variants, hook 101 is still suspended from pin 21, but is able to slide along the base plate 6 without being able to rotate around the axis of pin 21, if the inevitable backlash present in the coupling of the various components is not taken into consideration. In the variant in figure 7, the drilled lugs 201a have a straight side coupled in a sliding manner to the intermediate bottom wall of the base plate 6, and therefore they prevent the rotation of hook 101 in relation to plate 6. On the other hand, in the variant shown in figure 8, the ends of pin 21a are coupled to the slots 105 in a manner that is slidable in the longitudinal direction but is fixed in the angular direction. In particular, the cross section of these ends is not circular, but flattened, and therefore is elongated in the longitudinal direction. In this variant, the ends of the links 20 that correspond with holes 121 (not shown) continue to be hinged indirectly with hook 101 around the axis of pin 21, or they are hinged directly to hook 101 around an axis parallel to pin 21.

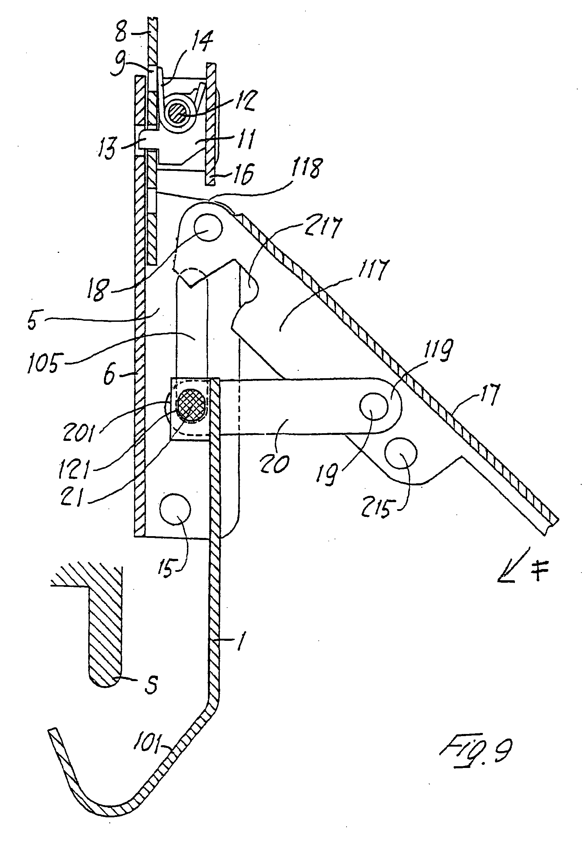

Figure 9 shows a third embodiment of device G, whose component parts are identified where possible by the same reference numerals as those in figure 2 and 3.

Unlike the solutions described above, the axis hinging the lever 17 to the base plate 6, defined by pin 18, is positioned above the slots 23, and therefore lever 17 must be rotated in a downward direction, instead of upwards, thus creating a far simpler and more ergonomic solution, to raise the hook in a longitudinal direction along slot 23 and hook up to sideboard S. As in the previous solutions, the links 20 act as a thrust strut during the closing and hook-up operation.

At the same time, the holes 15 are arranged under the slots 23 so that they are aligned with holes 215 when the lever 17 is in closed position.

Naturally, the present invention is not limited to the embodiments shown and described, but includes all the constructive variants and changes within the scope of protection defined in the attached claims below.

## Claims

1. Side curtain tensioning hook device for semi trailers and trailers, comprising:
- a base plate (6) suitable to be connected in a fixed position to a curtain (T);
- a lever (17) coupled to said base plate (6) in a rotatable manner about an axis;
- a hook (101) associated to operate with said lever (17) to move on a plane located at right angle with the rotation axis of said lever (17) between a hooked position and un-hooked position on a sideboard (S), in response to an action performed on said lever (17);
- at least one link (20) having a first end hinged to said lever (17) in a point at a distance from the rotation axis of said lever (17);
**characterised**
- **by** comprising guide means (105) carried by said base plate (6) to permit said hook (101) to slide with respect to said base plate in a longitudinal direction between the said hook-up and release positions;
- in that said link (20) has a second end, opposite said first end, and coupled in a rotatable manner to said hook (101).

2. Device according to claim 1, **characterised in that**
- said base plate (6) is provided with side walls (5) defining a substantially U-shaped configuration;
- said lever (17) is provided with side wings (117), which define a substantially U-shaped profile and are articulated to the side walls (5) of said base plate (6);
- said guide means comprise, for each said side wall (5), a respective slot (105) elongated in a longitudinal direction;
- two links are also provided (20); the links having their first ends hinged to the said side wings (117) and second ends opposite to said first ends and coupled with each other by means of a pin (21) located at right angle to said longitudinal direction;
- the ends of said pin (21) are inserted to slide inside said slots (105);
- a shank portion (1) of said hook (101) is suspended from a central portion of said pin (21).

3. Device according to claim 2, **characterised by** comprising releasable blocking means (22, 24; 122, 124) for blocking said lever (17) in the hook-up position of said hook (101).

4. Device according to claim 3, **characterised in that** said releasable blocking means comprise a bolt element (24) provided with a manoeuvring knob (22) mounted to slide inside a slot (23) made on the back wall said lever (17), and adapted to engage a portion of, or to be associated with, said base plate (6).

5. Device according to claim 3, **characterised in that** said releasable blocking means comprise a button slider (122) designed to slide in a guide (123) on the back wall of said lever (17) and carrying, at one end, a head having a circular section (124) that engages a slot; said slot being made in a shank portion (1) of said hook (101) and comprising, at one end, a circular section (125) having a diameter large enough to permit the passage of said head (124); said' circular section being connected with a further circular section (126) with a smaller diameter, smaller in size than the diameter of said head (124).

6. Device according to any of the claims from 2 to 5, **characterised in that** side wings (117) of said lever (17) are drilled with a through hole (215) which, in the hook-up position of said hook (101), is aligned with a through hole (15) of the said side walls (5) of said base plate (6) for the insertion of a Customs inspection seal.

7. Device according to any of the claims from 2 to 6, wherein said base plate (6) is in turn provided with a sliding plaque (8), an end of which is intended to be attached to an edge of said curtain (T).

8. Device according to claim 7, wherein said plaque (8) has two rows of holes (9) at regular intervals which extend along two longitudinal directrix of said plaque (8); said plaque (8) being guided to slide between two side guide walls (10) of the said base plate (6).

9. Device according to claim 8, wherein a pawl (11) is hinged to said side guide walls (10) of said base plate (6) and is provided with teeth (13) adapted to engage the holes (9) of said plaque (8).

10. Device according to claim 9, wherein said teeth (13) of said pawl (11) have a sloped and/or rounded side, so that the plaque (8) can travel in step mode in relation to the base plate (6) in a single direction only, thus preventing travel in the opposite direction.

11. Device according to any of the claims from 2 to 10, wherein said hook (101) is suspended in an articulated manner from said shank (21).

12. Device according to any of the claims from 2 to 10, wherein said hook (101) is configured in a single piece with said shank (21).

13. Device according to any of the claims from 2 to 12, wherein said side wings (117) of said lever (17) have a specifically shaped notch (217) positioned at a height that corresponds with the position that will be reached by the pin (21) at the end of its travel along the slots (105); said specifically shaped notch (217) being adapted to lock during the closure of the lever (17) on said pin (21), in order to retain said lever (17) in its closed position.

## Patentansprüche

1. Hakenvorrichtung zum Spannen der Seitenplane von Aufliegern und Anhängern, aufweisend:
- eine Grundplatte (6), die geeignet ist, in einer festgelegten Position mit einer Plane (T) verbunden zu werden;
- einen Hebel (17), der in einer um eine Achse rotierbaren Weise mit der Grundplatte (6) verbunden ist;
- einem Haken (101), der dazu vorgesehen ist, mit dem Hebel (17) zusammenzuwirken, um sich auf einer in einem rechten Winkel zu der Drehachse des Hebels (17) angeordneten Ebene zwischen einer an einer Seitenwand (S) verhakten Position und einer nicht-verhakten Position in Antwort auf eine mit dem Hebel (17) ausgeführten Bewegung zu bewegen;
- wenigstens einem Verbindungselement (20) mit einem ersten Ende, das an den Hebel (17) in einem von der Drehachse des Hebels (17) beabstandeten Punkt angelenkt ist;
**dadurch gekennzeichnet, dass**
- durch die Grundplatte (6) gehaltene Führungsmittel (105) vorgesehen sind, die es dem Haken (101) erlauben, in Bezug auf die Grundplatte in einer longitudinalen Richtung zwischen der verhakten Position und der Freigabepositionen zu gleiten;
- das Verbindungselement (20) ein zweites, dem ersten Ende gegenüberliegendes Ende aufweist und in einer drehbaren Weise mit dem Haken (101) verbunden ist.

2. Vorrichtung nach Anspruch 1, **dadurch gekennzeichnet, dass**
- die Grundplatte (6) mit Seitenwänden (5) versehen ist, die eine im Wesentlichen U-förmige Bauform definieren;
- der Hebel (17) mit Seitenflügeln (117) versehen ist, die ein im Wesentlichen U-förmiges Profil definieren und an den Seitenwänden (5) der Grundplatte (6) angelenkt sind;
- die Führungsmittel für jede Seitenwand (5) jeweils einen in longitudinaler Richtung langgestreckten Schlitz (105) aufweisen;
- auch zwei Verbindungselemente (20) vorgesehen sind; wobei Verbindungselemente ihre ersten Enden an den Seitenflügeln (117) angelenkt haben und zweite, den ersten Enden gegenüberliegende Enden haben und miteinander mittels eines Bolzens (21) verbunden sind, der in einem rechten Winkel zu der longitudinalen Richtung angeordnet ist;
- die Enden des Bolzens (21) zum Gleiten innerhalb der Schlitze (105) eingebaut sind;
- ein Schaftabschnitt (1) des Hakens (101) an einem Mittelabschnitt des Bolzens (21) aufgehängt ist.

3. Vorrichtung nach Anspruch 2, **dadurch gekennzeichnet, dass** entriegelbare Verriegelungsmittel (22, 24; 122, 124) zum Verriegeln des Hebels (17) in einer verhakten Position des Hakens (101) vorgesehen sind.

4. Vorrichtung nach Anspruch 3, **dadurch gekennzeichnet, dass** die entriegelbaren Verriegelungsmittel ein Sperrklinkenelement (24) aufweisen, das mit einem bewegbaren Noppen (22) versehen ist, der zum Gleiten in einem auf der Rückwand des Hebels (17) ausgebildeten Schlitz (23) angebracht und dazu eingerichtet ist, mit einem Abschnitt der Grundplatte (6) in Eingriff zu treten oder mit diesem verbunden zu werden.

5. Vorrichtung gemäß Anspruch 3, **dadurch gekennzeichnet, dass** das entriegelbare Verriegelungselement einen Knopfschieber (122) aufweist, der dazu ausgebildet ist, in einer Führung (123) auf der Rückwand des Hebels (17) zu gleiten und an einem Ende einen Kopf mit einem runden Abschnitt (124) zu tragen, der mit einem Schlitz in Eingriff steht; wobei der Schlitz in einem Schaftabschnitt (1) des Hakens (101) ausgebildet ist und an einem Ende einen runden Abschnitt (125) mit einem Durchmesser aufweist, der groß genug ist, um ein Durchtreten des Kopfes (124) zu erlauben; wobei der runde Abschnitt mit einem weiteren runden Abschnitt (126) mit kleinerem Durchmesser verbunden ist, wobei der weitere runde Abschnitt in seiner Größe kleiner ist als der Durchmesser des Kopfes (124).

6. Vorrichtung nach einem der Ansprüche 2 bis 5, **dadurch gekennzeichnet, dass** in die Seitenflügel (117) des Hebels (17) ein Durchgangsloch (215) gebohrt ist, welches in einer verhakten Position des Hakens (101) mit einer Durchgangsöffnung (15) der Seitenwände (5) der Grundplatte (6) ausgerichtet ist, um ein Zollinspektionssiegel einzuführen.

7. Vorrichtung nach einem der Ansprüche 2 bis 6, **dadurch gekennzeichnet, dass** die Grundplatte (6) wiederum mit einer verschiebbaren Platte (8) versehen ist, deren eines Ende dazu vorgesehen ist, an einer Kante der Plane (T) befestigt zu werden.

8. Vorrichtung nach Anspruch 7, **dadurch gekennzeichnet, dass** die Platte (8) zwei Reihen von Löchern (9) in regelmäßigen Abständen aufweist, die sich entlang zweier longitudinaler Mantellinien der Platte (8) erstrecken; wobei die Platte (8) zum Gleiten geführt ist zwischen zwei seitlichen Führungswänden (10) der Grundplatte (6).

9. Vorrichtung nach Anspruch 8, **dadurch gekennzeichnet, dass** eine Sperrklinke (11) an den seitlichen Führungswänden (10) der Grundplatte (6) angelenkt ist und mit Zähnen (13) versehen ist, die dazu geeignet sind, in die Löcher (9) der Platte (8) einzugreifen.

10. Vorrichtung nach Anspruch 9, **dadurch gekennzeichnet, dass** die Zähne (13) der Sperrklinke (11) eine abgeschrägte und/oder gerundete Seite aufweist, so dass die Platte (8) in einem Stufenmodus in nur einer Richtung in Bezug auf die Grundplatte (6) laufen kann, wobei so ein Lauf in die entgegengesetzte Richtung verhindert wird.

11. Vorrichtung nach einem der Ansprüche 2 bis 10, **dadurch gekennzeichnet, dass** der Haken (101) in einer freibeweglichen Weise an dem Schaft (21) aufgehängt ist.

12. Vorrichtung nach einem der Ansprüche 2 bis 10, **dadurch gekennzeichnet, dass** der Haken (101) als einteiliges Stück mit dem Schaft (21) aufgebaut ist.

13. Vorrichtung nach einem der Ansprüche 2 bis 12, **dadurch gekennzeichnet, dass** die Seitenflügel (117) des Hebels (17) eine speziell geformte Aussparung (217) aufweist, die in einer Höhe angeordnet ist, die mit der Position korrespondiert, die durch den Bolzen (21) an dem Ende seines Laufes entlang des Schlitzes (105) erreicht wird; wobei die speziell geformte Ausnehmung (217) dazu angepasst ist, während des Schließens des Hebels (17) an dem Bolzen (21) einzurasten, um den Hebel (17) in seiner geschlossenen Position zu halten.

## Revendications

1. Dispositif à crochet pour la tension d'une bâche latérale, destiné à des semi-remorques et remorques, comprenant :
- une plaque de base (6) adaptée pour être reliée à une bâche (T) dans une position fixe ;
- un levier (17) accouplé à ladite plaque de base (6) de façon rotative autour d'un axe ;
- un crochet (101) associé pour fonctionner avec ledit levier (17), pour un déplacement sur un plan situé en angle droit par rapport à l'axe de rotation dudit levier (17), entre une position accrochée et une position décrochée par rapport à un panneau latéral (S), en réponse à une action effectuée sur ledit levier (17) ;
- au moins un élément de liaison (20), dont la première extrémité est articulée avec ledit levier (17), en un point éloigné de l'axe de rotation dudit levier (17) ;
**caractérisé en ce que**
- il comprend un moyen de guidage (105) porté par ladite plaque de base (6) pour permettre audit crochet (101) de coulisser dans un sens longitudinal par rapport à ladite plaque de base, entre ladite position accrochée et ladite position décrochée ;
- ledit élément de liaison (20) possède une deuxième extrémité, située du côté opposé par rapport à la première extrémité et accouplée de manière rotative audit crochet (101).

2. Dispositif selon la revendication 1, **caractérisé en ce que**
- ladite plaque de base (6) est pourvue de parois latérales (5) définissant une configuration substantiellement en forme de U ;
- ledit levier (17) est pourvu d'ailettes latérales (117) définissant substantiellement un profil en forme de U et articulées avec les parois latérales (5) de ladite plaque de base (6) ;
- ledit moyen de guidage comprend, pour chacune desdites parois latérales (5), une fente respective (105) allongée dans un sens longitudinal ;
- deux éléments de liaison (20) sont également prévus ; les éléments de liaison ayant une première extrémité articulée avec lesdites ailettes latérales (117) et une deuxième extrémité opposée à ladite première extrémité, et étant accouplés l'un à l'autre au moyen d'une barrette (21) positionnée en angle droit par rapport audit sens longitudinal ;
- les extrémités de ladite barrette (21) sont insérées pour glisser dans lesdites fentes (105) ;
- une portion de tige (1) dudit crochet (101) est suspendue à une portion centrale de ladite barrette (21).

3. Dispositif selon la revendication 2, **caractérisé en ce qu'**il comprend des moyens de blocage libérables (22, 24 ; 122, 124) pour bloquer ledit levier (17) dans la position accrochée dudit crochet (101).

4. Dispositif selon la revendication 3, **caractérisé en ce que** lesdits moyens de blocage libérables comprennent un élément de boulon (24), pourvu d'un bouton de manoeuvre (22) monté de manière à glisser dans une fente (23) prévue dans la paroi arrière dudit levier (17), et adapté pour être associé à ou pour s'engager dans une portion de ladite plaque de base (6).

5. Dispositif selon la revendication 3, **caractérisé en ce que** les moyens de blocage libérables comprennent un bouton curseur (122) conçu pour glisser dans un guide (123) situé sur la paroi arrière dudit levier (17) et portant, à l'une des extrémités, une tête possédant une section circulaire (124) qui s'engage dans une fente ; ladite fente étant réalisée dans une portion de tige (1) dudit crochet (101) et comprenant, à l'une des extrémités, une section circulaire (125) présentant un diamètre suffisamment grand pour laisser passer ladite tête (124) ; ladite section circulaire étant reliée à une autre section circulaire (126) avec un diamètre plus petit, inférieur au diamètre de ladite tête (124).

6. Dispositif selon l'une quelconque des revendications 2 à 5, **caractérisé en ce que** des ailettes latérales (117) dudit levier (17) sont percées d'un trou traversant (215) qui, dans la position accrochée dudit crochet (101), est aligné avec un trou traversant (15) desdites parois latérales (5) de ladite plaque de base (6), en vue de l'insertion d'un sceau d'inspection douanier.

7. Dispositif selon l'une quelconque des revendications 2 à 6, dans lequel ladite plaque de base (6) est à son tour pourvue d'une plaque coulissante (8), dont l'une des extrémités est prévue pour être attachée à un bord de ladite bâche (T).

8. Dispositif selon la revendication 7, dans lequel ladite plaque (8) possède deux rangées de trous (9) disposés à intervalles réguliers, qui s'étendent le long de deux plans directeurs longitudinaux de ladite plaque (8) ; ladite plaque (8) étant guidée pour coulisser entre deux parois de guidage latérales (10) de ladite plaque de base (6).

9. Dispositif selon la revendication 8, dans lequel un cliquet (11) est articulé avec lesdites parois de guidage latérales (10) de ladite plaque de base (6), et pourvu de dents (13) adaptées pour s'engager dans les trous (9) de ladite plaque (8).

10. Dispositif selon la revendication 9, dans lequel lesdites dents (13) dudit cliquet (11) ont un côté incliné et/ou arrondi, si bien que la plaque (8) peut se déplacer pas à pas par rapport à la plaque de base (6), dans une seule direction, empêchant ainsi le déplacement dans la direction opposée.

11. Dispositif selon l'une quelconque des revendications 2 à 10, dans lequel ledit crochet (101) est suspendu de manière articulée à ladite tige (21).

12. Dispositif selon l'une quelconque des revendications 2 à 10, dans lequel ledit crochet (101) est conçu en une seule pièce avec ladite tige (21).

13. Dispositif selon l'une quelconque des revendications 2 à 12, dans lequel lesdites ailettes latérales (117) dudit levier (17) possèdent une entaille (217) avec une forme spécifique, qui est positionnée à une hauteur correspondant à la position qui sera atteinte par la barrette (21) à la fin de son déplacement le long des fentes (105) ; ladite entaille (217) à forme spécifique étant adaptée pour se verrouiller pendant la fermeture du levier (17) sur ladite barrette (21), afin de retenir ledit levier (17) dans sa position fermée.
